# DEMANDE DE BREVET EUROPEEN

(11) **EP 0 559 564 A1**
(43) Date de publication de la demande: **08.09.1993**
(21) Numéro de dépôt: 93400557.0
(22) Date de dépôt: 03.03.1993
(51) Int. Cl.: F16K 47/08

(54) **Vanne à détente progressive**

(30) Priorité: 03.03.1992 FR 9202538
(71) Demandeur: Verdelet, Alain, F-76810 Gruchet Saint Simeon (FR)
(72) Inventeur: Verdelet, Alain, F-76810 Gruchet Saint Simeon (FR)
(74) Mandataire: Obolensky, Michel

(57) **Abrégé**

Cette vanne comprend un corps (1) des conduits d'entrée et de sortie (5,6), un siège (16), un obturateur (17), des passages (30) dont la section va croissante dans le sens de l'écoulement du fluide et qui alternent avec des cavités (15) formant chambres de détente de fluide, ces passages étant définis par des disques annulaires (13,16) et une tige axiale (18) prolongeant l'obturateur (17) et délimitant entre eux les chambres de détente (15).

La tige (18) qui prolonge l'obturateur (17) comporte des zones discontinues (19) de conicités croissantes dans le sens de l'écoulement du fluide.

## Description

La présente invention concerne les vannes et en particulier les vannes destinées à mettre en communication ou interrompre cette communication entre une partie d'un circuit de fluide à pression relativement élevée et une partie de ce circuit dans laquelle la pression est sensiblement moins importante.

Dans les détentes de liquides sous pression, la maîtrise des différents paramètres est indispensable afin d'éviter les problèmes et les dommages mécaniques causés par les phénomènes de cavitation et de vaporisation.

On a décrit au brevet français n° 78 21 693 déposé le 21 juillet 1978 au nom de Alain VERDELET, une vanne pour circuit de fluide comprenant un corps, un conduit d'entrée et un conduit de sortie, un siège délimitant un orifice pour le passage du fluide, un obturateur coopérant avec le siège, ainsi que, coaxialement au siège, une série de passages dont la section va croissante dans le sens de l'écoulement du fluide et qui alternent avec des cavités constituant des chambres de détente du fluide, ces passages étant délimités par une tige axiale et des disques annulaires à peu près concentriques à cette tige et qui font partie d'éléments séparés en forme de coupelles, empilés dans un logement à paroi cylindrique formé dans le corps et délimitant entre eux les chambres de détente, les orifices ménagés dans les disques ayant comme connu en soi, une section constante et étant traversés par une portion, de forme tronconique, de la tige axiale.

La vanne du type défini ci-dessus permet d'assurer une détente successive par ajustement de la valeur de la pression du fluide par le coefficient de débit déterminé par la section du passage correspondant défini par un disque annulaire et la zone axiale de la portion tronconique de la tige axiale située en regard de l'orifice ménagé dans le disque.

L'invention vise un perfectionnement de la vanne définie ci-dessus, notamment en vue d'empêcher les phénomènes de vaporisation.

Elle a donc pour objet une vanne du type précité, caractérisée en ce que la portion tronconique de la tige axiale comporte des zones discontinues de conicités différentes croissant dans le sens de l'écoulement du fluide.

Suivant une caractéristique de l'invention, les zones de conicités différentes alternent avec des zones cylindriques de section réduite.

L'invention sera mieux comprise à l'aide de la description qui va suivre, donnée uniquement à titre d'exemple et faite en se référant aux dessins annexés, sur lesquels :
- la Fig.1 est une vue en élévation et en coupe d'une vanne suivant l'invention;
- la Fig.2 est une vue en coupe schématique à plus grande échelle de la partie de détente de la vanne de la Fig.1;
- la Fig.3 est une vue en coupe à plus grande échelle de la vanne de la Fig.1 représentée en position fermée; et
- la Fig.4 est une vue en coupe correspondant à celle de la Fig.3 représentant la vanne suivant l'invention en position de rinçage.

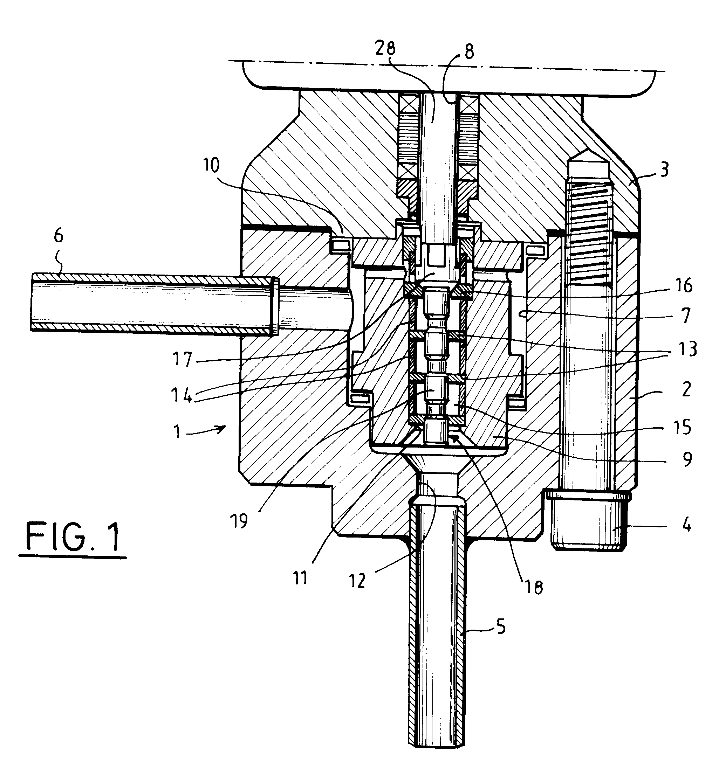

La Fig.1 représente en coupe une vanne perfectionnée suivant l'invention.

On voit sur le dessin, une vanne comprenant un corps 1 réalisé en deux parties 2,3 reliées par exemple par des vis 4. La partie 2 du corps comporte un conduit 5 d'arrivée de fluide relié à un circuit à haute pression et un conduit 6 de sortie de fluide relié à un circuit qui peut, par exemple constituer un circuit de prélèvement du fluide contenu dans le circuit à haute pression.

Les deux éléments 2 et 3 qui constituent le corps 1 sont percés axialement en 7 et 8.

Dans le logement 7 défini dans la partie 2 du corps 1, est reçu un manchon 9 qui est maintenu axialement entre le fond du logement 5 ménagé dans la partie 2 du corps 1 et une partie d'extrémité épaulée 10 de la partie 3 du corps 1. Le manchon 9 comporte un alésage axial 11 aligné avec le conduit 5 d'arrivée de fluide qui est relié à un passage axial 12 ménagé dans la partie 2 du corps 1.

Dans l'alésage axial 11 du manchon 9 est disposé un chemisage constitué d'une alternance de disques annulaires 13 et de douilles entretoises 14 qui définissent ensemble des chambres de détente successives 15 disposées sur le trajet du fluide.

A l'extrémité du chemisage opposée au conduit 5 d'arrivée de fluide est disposée une bague 16 de plus forte épaisseur qui forme siège pour un obturateur 17 déplaçable axialement dans le corps 1 et prolongé par une tige 18 comprenant des zones tronconiques successives 19 intercalées avec des zones cylindriques 20 de plus petit diamètre et qui coopèrent avec les orifices ménagés dans les disques annulaires 13 pour définir des passages ou intervalles de sections variables alternées avec les chambres de détente 15.

Au-dessus du disque annulaire 16 constituant le siège pour l'obturateur 17, est disposée une douille entretoise 14 percée d'orifices radiaux 21. L'ensemble du chemisage constitué par les disques annulaires 13 et les douilles entretoises 14 est maintenu en place contre un rebord épaulé 22 du manchon 9 par une bague 23 filetée extérieurement engagée dans une partie filetée de l'extrémité de l'alésage axial 11 du manchon 9.

En regard des orifices radiaux 21 ménagés dans la partie supérieure du chemisage 13,14, des passages radiaux 24 sont percés dans le manchon 9.

Ces passages communiquent avec une chambre intermédiaire 25 ménagée entre une partie rétrécie de la surface extérieure latérale du manchon 9 et la paroi interne du logement 7 percé dans la partie 2 du corps 1.

Dans cette chambre 25 débouche un orifice radial 26 ménagé dans la paroi latérale de la partie 2 du corps 1 et relié au conduit 6 de sortie du fluide.

L'obturateur 17 est fixé à une tige de manoeuvre 28 montée déplaçable axialement dans le perçage axial 8 de la partie 3 du corps 1 avec interposition de moyens d'étanchéité classiques qui ne sont pas décrits ici.

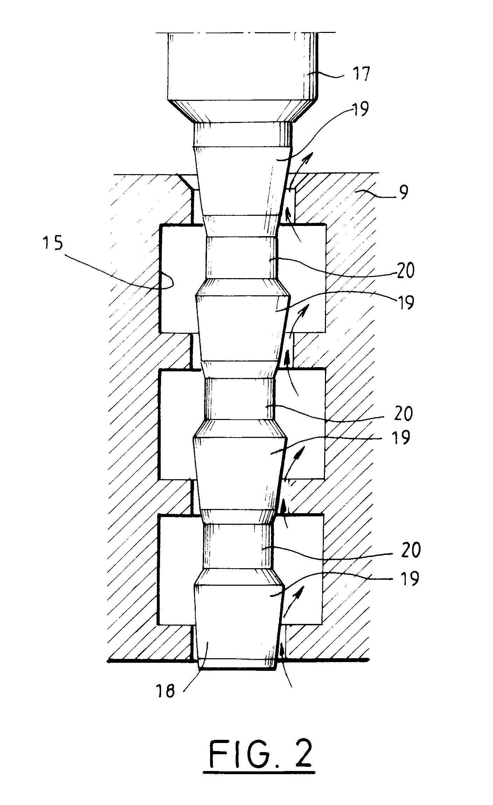

Ainsi qu'on peut mieux le voir sur la vue schématique de la Fig.2, sur laquelle on a représenté par une flèche axiale F, le sens de circulation du fluide, les zones tronconiques successives 19 de la tige 18 qui prolonge l'obturateur 17 dans la partie de détente du corps de vanne, présentent des conicités croissantes dans le sens de déplacement du fluide.

Dans le présent mode de réalisation, la tige 18 qui prolonge l'obturateur 17 comporte quatre zones de conicités différentes qui définissent avec les disques annulaires 13 du chemisage représenté aux Fig.1, 3 et 4, trois chambres de détente 15.

Il est bien entendu possible de prévoir sur la tige qui prolonge l'obturateur 17 un nombre de zones tronconiques différent qui sera alors associé avec un nombre correspondant de disques annulaires de chemisage pour définir entre eux des chambres de détente dont le nombre satisfera aux conditions de détente désirées.

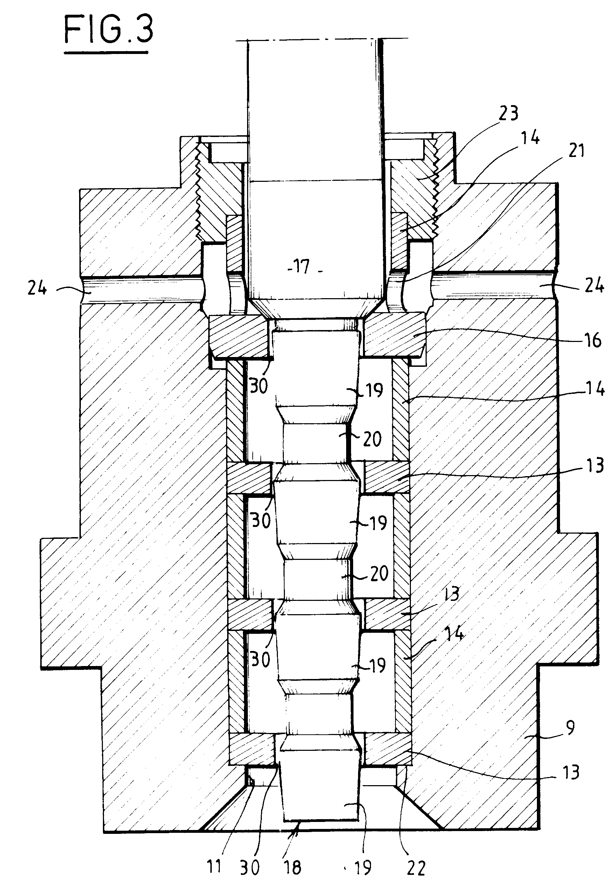

Sur la Fig.3, on a représenté la vanne suivant l'invention en position fermée dans laquelle on voit que les diverses zones tronconiques 19 sont disposées en regard des disques annulaires 13 et 16 correspondant et l'obturateur 17 est appliqué sur son siège défini par la bague supérieure 16 du chemisage du manchon 9.

On voit sur cette figure qu'il subsiste toujours entre l'orifice ménagé dans chaque disque annulaire 13,16 et la zone tronconique correspondante 19, un intervalle 30 qui fait qu'il n'y a jamais application des zones tronconiques contre les surfaces internes des disques annulaires 13,16.

Sur la vue schématique de la Fig.2, on constate que du fait des conicités croissantes des zones 19 dans le sens du déplacement du fluide, les sections successives des intervalles 30 augmentent dans le sens de l'écoulement du fluide et contribuent ainsi avec les chambres de détente 15, à une action de détente régulière en direction de l'amont vers l'aval de la vanne.

A titre d'exemple, on donne ci-après les valeurs des pentes des zones tronconiques successives 19 de l'amont vers l'aval de la zone de détente de la vanne dans le sens de la circulation du fluide.
- 8,616 ‰
- 13,371 ‰
- 21,278 ‰
- 33,909 ‰

La différentielle de pression maximum admissible dans une vanne est conditionnée par les trois paramètres suivants.
- la pression de vaporisation du liquide,
- la pression en amont,
- le coefficient intrinséque Kc de la vanne.

La pression de vaporisation étant une caractéristique propre et immuable du liquide, il convient d'agir sur la pression amont ou sur le coefficient Kc de la vanne.

Les calculs ont été menés avec une valeur de Kc = 0,62, ce qui est relativement pessimiste par rapport à la réalité qui elle se situe entre 0,65 et 0,70.

Cependant, avec une valeur de Kc = à 0,62, on élimine tous risques de cavitation naissante dans le fluide.

Grâce à l'agencement qui vient d'être décrit, on a obtenu dans les intervalles successifs 30 entre les zones tronconiques 19 de la tige 18 et les passages axiaux correspondants ménagés dans les disques annulaires 13 disposé en regard de ces zones, des vitesses réelles du fluide fonction de la section de passage aux différents étages de détente, dont les valeurs, de l'amont vers la vanne sont les suivantes.
V1 = 123,903 m/s
V2 = 76,928 m/s
V3 = 46,897 m/s
V4 = 28,871 m/s

On voit donc que grâce à l'agencement qui vient d'être décrit, on obtient une détente régulière et successive dans le sens de la circulation du fluide qui permet d'éviter tout phénomène de cavitation et de vaporisation dans la vanne suivant l'invention.

Les calculs réalisés pour déterminer la conicité des zones tronconiques successives de la tige 18 prolongeant l'obturateur 17, tiennent compte pour chaque étage du fait que la variation de pression amont/aval doit respecter la relation ΔP < Kc (P1 - Pv) dans laquelle P1 est la pression amont et Pv la pression de vaporisation.

Le respect de cette condition est indispensable pour ne pas entraîner un phénomène de cavitation.

L'agencement suivant l'invention comporte en outre comme représenté aux dessins, des zones cylindriques 20 de sections réduites qui, lorsqu'elles se présentent en regard des orifices définis dans les disques annulaires 13,16 du chemisage du manchon 9, lors du déplacement axial de l'obturateur 17 et de la tige 18 vers le haut des Fig.1 à 4 offrent une section de débit très importante pouvant provoquer un phénomène de chasse.

L'intérêt d'une telle alternance de parties à débit contrôlé constituées par les zones tronconiques 19 et de parties à débit plus important constituées par les parties cylindriques 20 amincies réside dans le fait qu'une vanne équipée d'un tel dispositif de détente peut être utilisée pour des fluides chargés par exemple de particules qui risquent d'entraîner l'obturation de la vanne.

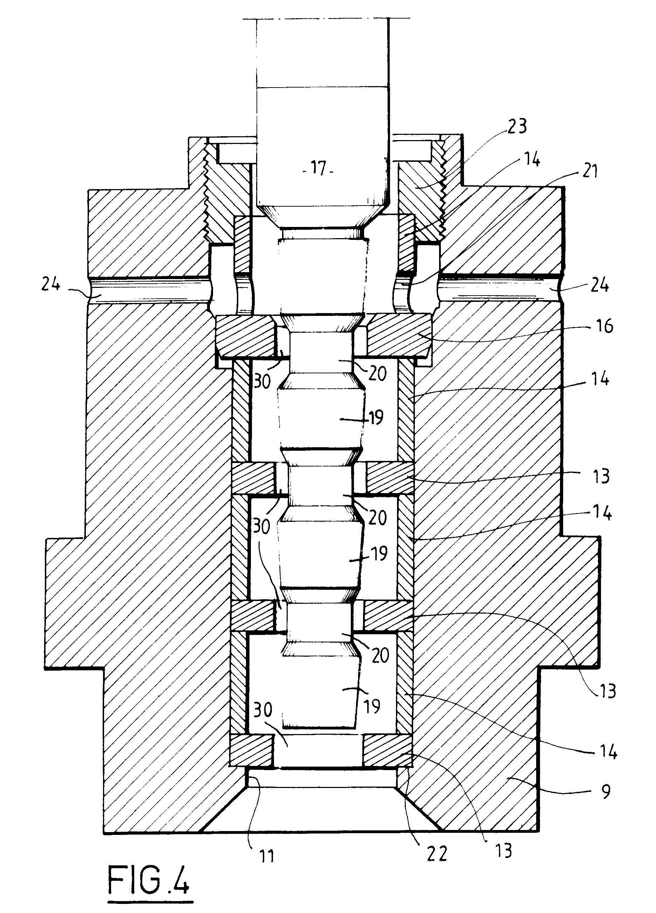

Dans la position de l'obturateur représentée à la Fig.4, les zones de plus faibles sections 20 sont disposées en regard des orifices axiaux ménagés dans les disques annulaires 13 et 16, de sorte que le fluide est libre de circuler entre l'amont et l'aval de la vanne, les intervalles importants délimités par les zones cylindriques 20 et les parois des passages internes de disques annulaires 13 et 16, permettant au fluide qui circule alors dans la vanne, d'entraîner avec lui toutes particules qui se seraient accumulées au cours du fonctionnement de la vanne avec détente contrôlée du fluide.

Une vanne telle que celle qui vient d'être décrite en référence aux dessins, peut être actionnée par un servomoteur qui peut être à son tour raccordé à des capteurs et à des dispositifs de positionnement non représentés, permettant ainsi d'automatiser l'ensemble de la vanne.

La vanne suivant l'invention peut faire varier un débit, une pression et également assurer un débit constant avec une pression aval constante tout en ayant des variations amont en même temps qu'elle permet de procéder à une purge lors d'un bourrage du à une accumulation de particules.

## Revendications

1. Vanne pour circuit de fluide comprenant un corps (1), un conduit d'entrée (5) et un conduit de sortie (6), un siège (16) délimitant un orifice pour le passage du fluide, un obturateur (17) coopérant avec le siège, ainsi que, coaxialement au siège, une série de passages (30) dont la section va croissante dans le sens de l'écoulement du fluide et qui alternent avec des cavités (15) constituant des chambres de détente du fluide, ces passages étant délimités par une tige axiale et des disques annulaires (13,16) à peu près concentriques à cette tige et qui font partie d'éléments séparés, empilés dans un logement (11) à paroi cylindrique formé dans le corps et délimitant entre eux les chambres de détente (15), les orifices ménagés dans les disques ayant comme connu en soi, une section constante et étant traversés par une portion, de forme tronconique, de la tige axiale (18), caractérisée en ce que la portion tronconique de la tige axiale (18) comporte des zones discontinues (19) de conicités différentes croissant dans le sens de l'écoulement du fluide.

2. Vanne suivant la revendication 1, caractérisée en ce que les zones (19) de conicités différentes alternent avec des zones cylindriques (20) de section réduite délimitant avec les orifices ménagés dans les disques annulaires des passages de section accrue pour le fluide en vue d'assurer le décolmatage par rinçage de la vanne.

3. Vanne suivant l'une des revendications 1 et 2, caractérisée en ce que les chambres de détente (15) sont définies par un chemisage formé des disques annulaires (13,16) et de douilles entretoises (14) disposées le passage axial (11) ménagé dans un manchon (9) logé dans le corps (1).

4. Vanne suivant la revendication 3, caractérisée en ce que son siège est constitué par l'un des disques annulaires (16) et en ce qu'une douille (14) disposée du siège par rapport au conduit d'entrée (5) comporte des orifices radiaux (21) communiquant avec une chambre (25) ménagée entre la surface extérieure du manchon (9) et un logement (7) du corps (1), recevant ledit mandrin 9, le conduit (6) de sortie du fluide.

5. Vanne suivant l'une des revendications 3 et 4, caractérisée en ce que le chemisage (13,14,16) est maintenu dans l'alésage axial (11) du manchon (9) disposé dans le corps de vanne, au moyen d'une pièce (23) filetée extérieurement qui applique le chemisage (13,14,16) contre un rebord épaulé (22) du manchon (9) et qui est engagée dans une portion filetée correspondante de l'alésage axial 11.
